Europäisches Patentamt

European Patent Office

Office européen des brevets

(11) Veröffentlichungsnummer : **0 139 808**
**B1**

(12) **EUROPÄISCHE PATENTSCHRIFT**

(45) Veröffentlichungstag der Patentschrift :
12.11.86

(21) Anmeldenummer : 84100022.7

(22) Anmeldetag : 03.01.84

(51) Int. Cl.⁴ : **F 16 K 31/46**, F 16 K 31/528,
E 03 C   1/23

(54) Drehgriffarmatur zur Fernbetätigung von zwei oder mehreren Ablaufventilen in Spültischen, Waschtischen oder dergleichen.

(30) Priorität : 21.09.83 DE 3334010

(43) Veröffentlichungstag der Anmeldung :
08.05.85 Patentblatt 85/19

(45) Bekanntmachung des Hinweises auf die Patenterteilung : 12.11.86 Patentblatt 86/46

(84) Benannte Vertragsstaaten :
BE CH DE FR GB IT LI LU NL SE

(56) Entgegenhaltungen :
AT-A-  284 760
CH-A-  300 435
DE-A- 3 041 816
FR-A- 1 000 371
GB-A- 1 195 954
GB-A- 2 092 695
US-A- 3 998 241

(73) Patentinhaber : Firma Franz Viegener II
Ennester Weg 9
D-5952 Attendorn (DE)

(72) Erfinder : Viegener, Walter
Ennester Weg 9
D-5952 Attendorn (DE)

(74) Vertreter : Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)

## Beschreibung

Die Erfindung bezieht sich auf eine Drehgriffarmatur zur Fernbetägigung von zwei oder mehreren Ablaufventilen in Spültischen, Waschtischen oder dergleichen, mit einem durch eine Bohrung des Randes des sanitären Einrichtungsgegenstandes steckbaren und mit zwei Muttern festlegbaren Außengehäuse, dessen oberes Ende zur Aufnahme einer Abdeckrosette und eines Drehgriffes ausgebildet und in dem ein mit dem Drehgriff verbundenes Betätigungsteil drehbar gelagert ist.

Es ist eine Drehgriffarmatur dieser Art zur Fernbetätigung von zwei Ablaufventilen bekannt (österreichische Patentanmeldung A 2847/60), bei der das Heben und Senken des Ventilteller durch zwei Drehgriffe erfolgt, die auf einer Stange bzw. einer Hülse befestigt sind. Die Stange und die Hülse sind jeweils mit einem Hebel versehen, mit dem das Betätigungsgestänge eines Ablaufventils gekoppelt ist. Diese Ausführung ist sowohl fertigungs- als auch montagemäßig sehr aufwendig.

Es sind ferner Drehgriffarmaturen zur Fernbetätigung eines Ablaufventils eines sanitären Einrichtungsgegenstandes bekannt (DE-A-3 041 816), bei denen das Heben und das Senken des Ventiltellers des Ablaufventils mittels eines Bowdenzuges vorgenommen wird, dessen Seele einerseits an dem Betätigungshebel des Ablaufventils und andererseits an einer mit Innengewinde versehenen Mutter befestigt ist. Diese Mutter wird durch eine mit einem Handrad versehene Spindel auf- und abwärts bewegt. Dabei wird die Seele des Bowdenzuges in eine andere Lage gebracht und bewirkt das Heben bzw. Senken des Ventiltellers.

Bei einer anderen Ausführung (Fig. 3 und 4 der DE-A-3 041 816) ist die Mutter mit einer als schraubenlinienförmige Nute ausgebildeten Steuerkurve versehen, in die ein Betätigungsbolzen der Spindel eingreift.

Der Erfindung liegt die Aufgabe zugrunde, eine Drehgriffarmatur der eingangs genannten Art so zu gestalten, daß mit konstruktiv einfachen Mitteln zwei oder mehrere Ablaufventile betätigt werden können.

Diese Aufgabe wird nach der Erfindung dadurch gelöst, daß ausschließlich ein Drehgriff vorgesehen und an dem dem Drehgriff abgewandten Ende das Betätigungsteil mit einer umlaufenden Steuerkurve ausgerüstet ist, die mit Nocken von im Außengehäuse oder in einem gehäusefesten Teil parallel zur Längsachse des Außengehäuses gleitbar gelagerten Bolzen zusammenarbeitet, wobei die Bolzen mit einem Ende einer Seele eines zum Betätigungshebel des Ablaufventils führenden Bowdenzuges verbunden sind.

Bei einer vorteilhaften Ausführungsform der Erfindung ist das Betätigungsteil als Hülse ausgebildet. Die umlaufende Steuerkurve ist an der Außen- oder an der Innenfläche der Hülse vorgesehen.

Der Zeitpunkt für das Öffnen und das Schließen der Ventile bei einer Betätigung des Drehgriffes ist abhängig von der Ausbildung der Steuerkurve.

Weitere Merkmale der Erfindung ergeben sich aus den Unteransprüchen und der folgenden Beschreibung einer vorteilhaften, beispielsweisen Ausführungsform. Es zeigen:

Figur 1 eine Drehgriffarmatur zur Fernbetätigung von zwei Ablaufventilen, und zwar teilweise geschnitten,

Figur 2 eine Teilansicht der Ausführung nach der Fig. 1 in vergrößertem Maßstab und

Figur 3 die Abwicklung der Steuerkurve, die in den Fig. 1 und 2 aufgezeigt ist.

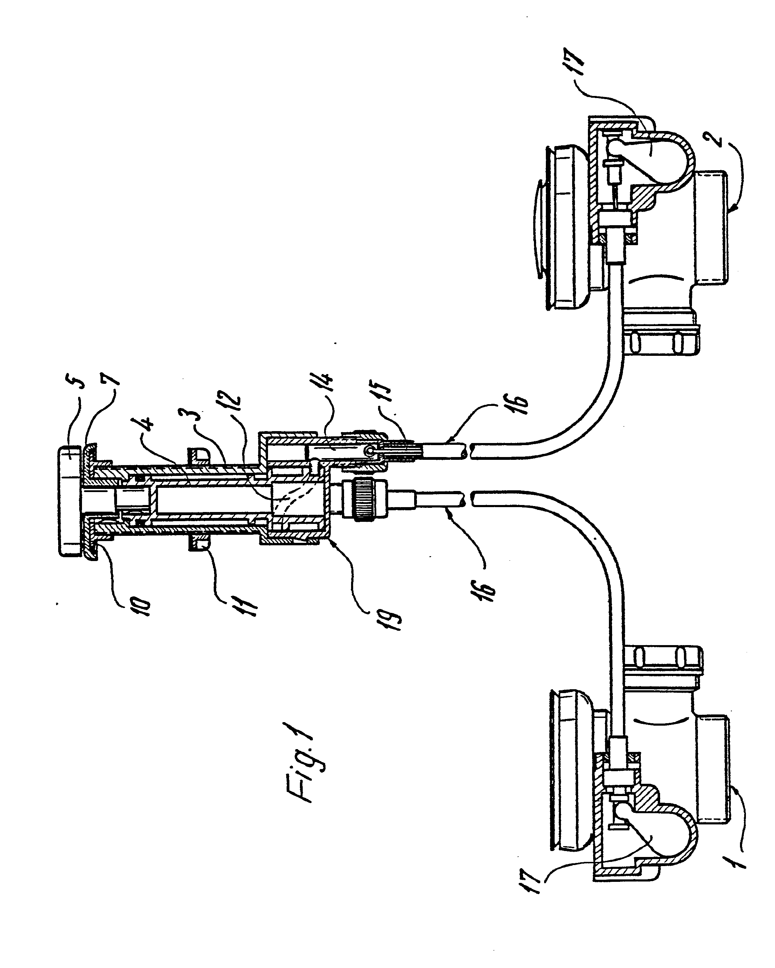

Die Drehgriffarmatur nach der Fig. 1 wird zur Fernbetätigung der Ablaufventile 1 und 2 verwendet.

Diese Drehgriffarmatur weist ein Außengehäuse 3 auf, in dem ein als Hülse 4 ausgebildetes Betätigungsteil drehbar gelagert ist. Diese Hülse 4 ist am oberen Ende durch eine Nut-Feder-Verbindung mit einem Drehgriff 5 verbunden, der in einem zylindrischen Teil 6 einer Rosette 7 drehbar gelagert ist.

Das Außengehäuse 3 erstreckt sich durch eine Bohrung 8 eines Randes 9 eines sanitären Einrichtungsgegenstandes und wird durch eine obere Mutter 10 und eine untere Mutter 11, die auf ein Außengewinde des Außengehäuses geschraubt werden, an dem Rand 9 festgelegt.

Die Hülse 4 ist an dem dem Drehgriff 5 abgewandten Ende mit einer umlaufenden Steuerkurve 12 ausgerüstet. Bei dem dargestellten Ausführungsbeispiel wird die Steuerkurve 12 durch eine an der Außenseite der Hülse 4 vorgesehene Nut gebildet. Es ist jedoch auch denkbar, daß diese Steuerkurve an der Innenseite der Hülse vorgesehen ist. Die Steuerkurve kann auch durch einen von der Hülse 4 vorspringenden Steg gebildet werden.

Mit der Steuerkurve 12 arbeiten Nocken 13 von Bolzen 14 zusammen, die mit einem Ende einer Seele 15 eines Bowdenzuges 16 verbunden sind, während das andere Ende dieser Seele an einem Betätigungshebel 17 des jeweiligen Ablaufventils 1 oder 2 befestigt ist.

Anstelle der Hülse 4 kann auch ein anderes Betätigungsteil verwendet werden, z. B. ein Vollkörper, der aus Kunststoff hergestellt sein kann und die Steuerkurve 12 an seinem Außenmantel aufweist.

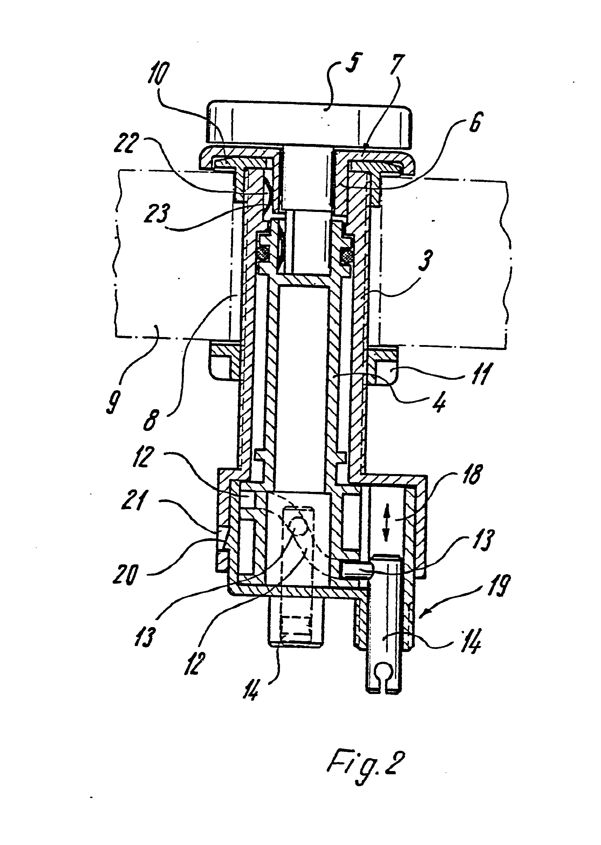

Bei der Konstruktion nach den Fig. 1 und 2 sind die Bolzen 14 in Führungsbohrungen 18 eines Verschlußgehäuses 19 gleitbar gelagert, das mit dem unteren Teil des Außengehäuses 3 verbunden ist. Zur Verbindung kann das Verschlußgehäuse mit Rastnasen 20 ausgerüstet sein, die in Rastausnehmungen 21 des Außengehäuses eingefedert werden. Es besteht aber auch die Möglichkeit, das Verschlußgehäuse mit dem Außengehäuse zu verschweißen oder mittels eines Klebers zu verbinden.

Zur Festlegung der Rosette 7 gegenüber dem Außengehäuse 3 ist das Außengehäuse mit einer Nut 22 ausgerüstet, in die ein Nocken der Rosette 7 eingreift. In dieser Nut ist auch eine Feder 23 vorgesehen, an der sich der Nocken der Rosette abstützt.

Um die jeweilige Stellung der Ventilkegel der Ablaufventile 1 und 2 am Drehgriff 5 ersehen zu können, besteht die Möglichkeit, die unter dem Drehgriff vorgesehene Rosette 7 zu kennzeichnen und den Drehgriff mit einem entsprechenden Hinweiszeichen zu versehen. Dazu ist es jedoch erforderlich, daß die Rosette 7 lagerichtig zur Hülse 4 aufgesteckt wird. Dies wird durch die beschriebene Nut-Feder-Verbindung zwischen der Rosette und dem Außengehäuse erreicht.

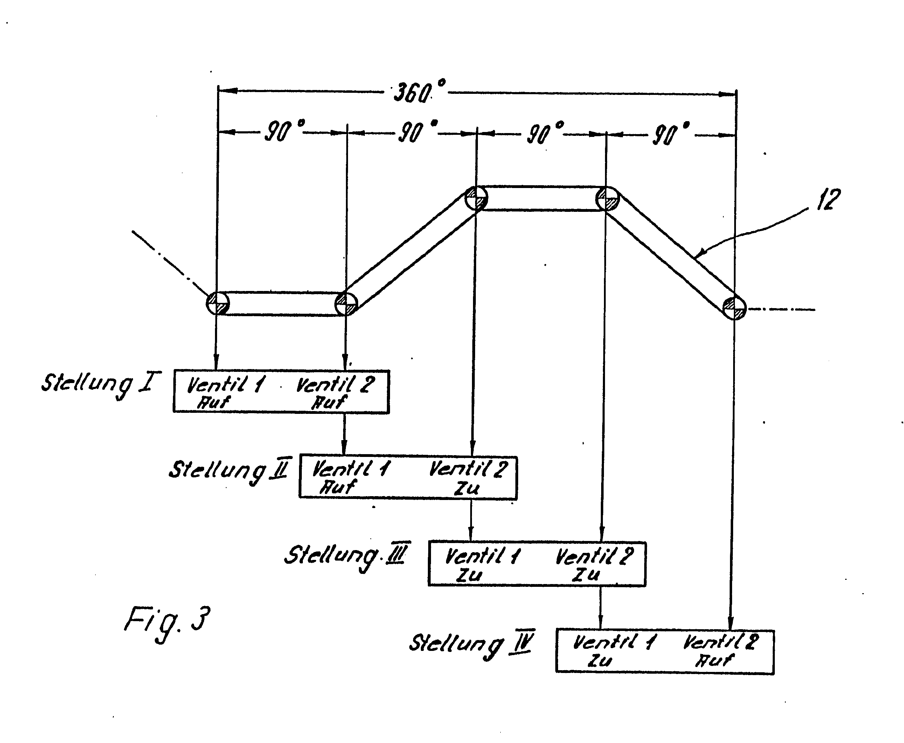

In der Fig. 3 ist eine Abwicklung der an der Hülse 4 vorgesehenen Steuerkurve 12 aufgezeigt. Die Steuerkurve ist in diesem Ausführungsbeispiel so ausgelegt, daß die Steuerkurve einen flachen, einen steigenden, einen flachen und einen fallenden Abschnitt aufweist und jeder Abschnitt sich über einen Winkelbereich von 90° erstreckt.

In dieser Fig. 3 sind vier Ventilstellungen aufgezeigt.

Die Steuerkurve kann auch einen anderen Verlauf haben.

Bezugszeichen

    1 Ablaufventile
    2 Ablaufventile
    3 Außengehäuse
    4 Hülse
    5 Drehgriff
    6 Teil
    7 Rosette
    8 Bohrung
    9 Rand
    10 Mutter
    11 Mutter
    12 Steuerkurve
    13 Nocken
    14 Bolzen
    15 Seele
    16 Bowdenzug
    17 Betätigungshebel
    18 Führungsbohrung
    19 Verschlußgehäuse
    20 Rastnase
    21 Rastaunehmung
    22 Nut
    23 Feder

**Patentansprüche**

1. Dreharmatur zur Fernbetätigung von zwei oder mehreren Ablaufventilen (1, 2) in Spültischen, Waschtischen oder dergleichen, mit einem durch eine Bohrung (8) des Randes (9) des sanitären Einrichtungsgegenstandes steckbaren und mit zwei Muttern (10, 11) festlegbaren Außengehäuse (3), dessen oberes Ende zur Aufnahme einer Abdeckrosette (7) und eines Drehgriffs (5) ausgebildet und in dem ein mit dem Drehgriff (5) verbundenes Betätigungsteil (4) drehbar gelagert ist, dadurch gekennzeichnet, daß ausschließlich ein Drehgriff (5) vorgesehen und an dem dem Drehgriff abgewandten Ende das Betätigungsteil (4) mit einer umlaufenden Steuerkurve (12) ausgerüstet ist, die mit Nocken (13) von im Außengehäuse (3) oder in einem gehäusefesten Teil parallel zur Längsachse des Außengehäuses (3) gleitbar gelagerten Bolzen (14) zusammenarbeitet, wobei die Bolzen mit einem Ende einer Seele (15) eines zum Betätigungshebel des Ablaufventils (1, 2) führenden Bowdenzuges (16) verbunden sind.

2. Drehgriffarmatur nach Anspruch 1, dadurch gekennzeichnet, daß das Betätigungsteil als Hülse (4) ausgebildet ist und die umlaufende Steuerkurve (12) an der Außen- oder an der Innenfläche der Hülse vorgesehen ist.

3. Drehgriffarmatur nach Anspruch 1 oder 2, dadurch gekennzeichnet, daß die Steuerkurve (12) als Nut oder als vom Betätigungsteil vorspringender Steg ausgebildet ist.

4. Drehgriffarmatur nach Anspruch 1, dadurch gekennzeichnet, daß die Bolzen (14) in einem Verschlußgehäuse (19) gleitbar gelagert sind, das mit dem unteren Ende des Außengehäuses (3) verbunden ist.

5. Drehgriffarmatur nach Anspruch 4, dadurch gekennzeichnet, daß das Verschlußgehäuse (19) mit dem Außengehäuse durch Rastmittel verbunden oder mit dem Außengehäuse verschweißt oder verklebt ist.

6. Drehgriffarmatur nach Anspruch 1, dadurch gekennzeichnet, daß das Verschlußgehäuse (19) mit zwei oder mehreren vertikalen Führungsbohrungen (18) für die Gleitlagerung der Bolzen (14) ausgerüstet ist.

7. Drehgriffarmatur nach Anspruch 1, dadurch gekennzeichnet, daß die Rosette (7) über eine Nut-Feder-Verbindung an dem Außengehäuse (3) festgelegt ist.

8. Drehgriffarmatur nach Anspruch 7, dadurch gekennzeichnet, daß die Rosette (7) mit einem Nocken versehen ist, der in die Nut des Außengehäuses (3) eingreift und daß der Nocken der Rosette sich an einer in die Gehäusenut eingesetzten Feder abstützt.

9. Drehgriffarmatur nach Anspruch 1, dadurch gekennzeichnet, daß die umlaufende Steuerkurve (12) einen flachen, einen steigenden, einen flachen und einen fallenden Abschnitt aufweist und jeder Abschnitt sich über einen Winkelbereich von 90° erstreckt (Fig. 3).

**Claims**

1. A rotary fitment for remote actuation of two or more discharge valves (1, 2) in rinsing sinks, wash stands or the like, comprising an outer housing (3) which can be passed through a bore (8) in the edge (9) of the item of sanitary ware and which can be fixed with two nuts (10, 11), the upper end of the outer housing (3) being arranged to accommodate a cover collar (7) and a rotary handle (5) and an actuating member (4) connected to the rotary handle (5) being rotatably mounted in the outer housing (3), characterised in that only one rotary handle (5) is provided and at the end remote from the rotary handle the actuating member (4) is provided with a peripheral control cam (12) which co-operates with projections (13) on pins (14) which are slidably mounted in the outer housing (3) or in a part which is fixed with respect to the housing, in parallel relationship th the longitudinal axis of the outer housing (3), wherein the pins are connected to one end of a cable (15) of a Bowden cable arrangement (16) which leads to the actuating lever of the discharge valve (1, 2).

2. A rotary handle fitment according to claim 1 characterised in that the actuating member is in the form of a sleeve (4) and the peripheral control cam (12) is provided at the outside surface or the inside surface of the sleeve.

3. A rotary handle fitment according to claim 1 or claim 2 characterised in that the control cam (12) is in the form of a groove or a web portion projecting from the actuating member.

4. A rotary handle fitment according to claim 1 characterised in that the pins (14) are mounted slidably in a closure housing (19) which is connected to the lower end of the outer housing (3).

5. A rotary handle fitment according to claim 4 characterised in that the closure housing (19) is connected to the outer housing by retaining means or is welded or secured by adhesive to the outer housing.

6. A rotary handle fitment according to claim 1 characterised in that the closure housing (19) is provided with two or more vertical guide bores (18) for slidably mounting the pins (14).

7. A rotary handle fitment according to claim 1 characterised in that the collar (7) is fixed on the outer housing (3) by way of a tongue-and-groove connection.

8. A rotary handle fitment according to claim 7 characterised in that the collar (7) is provided with a projection which engages into the groove in the outer housing (23) and that the projection on the collar bears against a tongue which is fitted into the groove in the housing.

9. A rotary handle fitment according to claim 1 characterised in that the peripheral control cam (12) has a flat portion, a rising portion, a flat portion and a falling portion and each portion extends over an angular range of 90° (Figure 3).

**Revendications**

1. Dispositif tournant d'actionnement à distance de deux vannes de vidange (12) ou plus pour éviers, lavabos ou similaires comportant un boîtier extérieur (3) à enfiler dans un perçage (8) du bord (9) de l'appareil sanitaire et à fixer au moyen de deux écrous (10, 11) dont l'extrémité supérieure est conçue de manière à recevoir une plaque de couverture (7) et une poignée tournante (5) et dans lequel est monté en rotation un élément de manœuvre (4), caractérisé en ce qu'il est prévu exclusivement une poignée tournante (5) et en ce qu'à l'extrémité opposée à la poignée tournante, l'élément de manœuvre (4) est équipé d'une courbe de commande (12) tournante qui coopère avec des nez (13) de tiges (14) coulissant dans le boîtier extérieur (3) ou dans une partie fixée au boîtier, parallèlement à l'axe longitudinal du boîtier extérieur (3), les tiges étant reliées à une extrémité d'une âme (15) d'un câble Bowden menant au levier de manœuvre (17) de la vanne de vidange (1, 2).

2. Dispositif tournant selon la revendication 1, caractérisé en ce que l'élément de manœuvre est un fourreau (4) et en ce que la courbe de commande (12) tournante est prévue sur la face externe ou interne du fourreau.

3. Dispositif tournant selon la revendication 1 ou 2, caractérisé en ce que la courbe de commande (12) est une rainure ou une arête faisant saillie de l'élément de manœuvre.

4. Dispositif tournant selon la revendication 1, caractérisé en ce que les tiges (14) sont montées coulissantes dans un boîtier d'obturation (19) relié à l'extrémité inférieure du boîtier extérieur (3).

5. Dispositif tournant selon la revendication 4, caractérisé en ce que le boîtier d'obturation (19) est relié au boîtier extérieur par des moyens d'encliquetage ou en ce qu'il est soudé ou collé à ce boîtier extérieur.

6. Dispositif tournant selon la revendication 1, caractérisé en ce que le boîtier d'obturation (19) est pourvu de deux trous de guidage (18) verticaux, ou plus, pour le guidage à glissement des tiges (14).

7. Dispositif tournant selon la revendication 1, caractérisé en ce que la plaque (7) est fixée sur le boîtier extérieur (3) par un assemblage rainure-ressort.

8. Dispositif tournant selon la revendication 7, caractérisé en ce que la plaque (7) est pourvue d'une saillie qui s'engage dans la rainure du boîtier extérieur (3) et en ce que la saillie de la plaque (7) prend appui sur un ressort placé dans la rainure du boîtier.

9. Dispositif tournant selon la revendication 1, caractérisé en ce que la courbe de commande (12) tournante présente un tronçon plat, un tronçon montant, un tronçon plat et un tronçon descendant, chaque tronçon s'étendant sur une zone angulaire de 90° (figure 3).

Fig.1

Fig. 2

**Fig. 3**

Stellung I — Ventil 1 Auf — Ventil 2 Auf
Stellung II — Ventil 1 Auf — Ventil 2 Zu
Stellung III — Ventil 1 Zu — Ventil 2 Zu
Stellung IV — Ventil 1 Zu — Ventil 2 Auf

360°  90° 90° 90° 90°

12

0 139 808